# EUROPEAN PATENT APPLICATION

(11) **EP 1 231 782 A1**
(43) Date of publication of application: **14.08.2002**
(21) Application number: 01103344.6
(22) Date of filing: 13.02.2001
(51) Int. Cl.: H04N 5/44

(54) **Tuning device for a data distribution network**

(71) Applicant: Sony International (Europe) GmbH, 10785 Berlin (DE)
(72) Inventor: Buchner, Peter, Advanced Technology Center Stuttg., 70327 Stuttgart (DE); Schwager, Andreas, Advanced Techn. Center Stuttg., 70327 Stuttgart (DE); Szucs, Paul, Advanced Technology Center Stuttgart, 70327 Stuttgart (DE)
(74) Representative: Müller - Hoffmann & Partner

(57) **Abstract**

A tuning device comprises a tuner unit (1) generating a transport stream (TS) from a received service, and a storage unit (3) for storing at least a partial transport stream (PTS) generated from said transport stream (TS) and outputting said partial transport stream (PTS) upon request.

## Description

The present invention concerns a network tuning device, in particular a network tuning device generating transport stream from a received service. Further, the invention generally relates to time shift applications.

DE 198 44 635 A1 describes an external hard disk as a video recording device connected to an IEEE 1394 bus system. Data is transmitted to said hard disk in an isochronous channel and the storage of data and the access to stored data is controlled through a TV set. Different possibilities to store and view at the same time are possible, i. e. to store a program while watching it simultaneously, to store a program and watch a different program, and to store a program and begin watching the stored program while the storage is not finished, i. e. to watch a program time shifted.

Therewith, the general idea and necessary hardware for time shifting is described. However, only selected video pictures can be stored which are displayed on the TV or another video viewing device within the network, i. e. it is only possible to store the complete content of an isochronous channel set up in-between a set top box receiving said program and generating a transport stream as content of said isochronous channel and said display device.

A different embodiment of time shift applications is described in WO 99/33265 which describes a device receiving a raw video stream, compressing and recording it to enable a time shift playback by retrieving, decompressing and outputting the raw video stream again.

Another alternative to implement a time shift application in a network is described in EP 0 987 892 A2 and EP 0 987 890 A2 which describe how a time shift application can be set up with a network tuner device, a network VCR device and a general use personal computer which devices are separated and connected via the network. In particular, it is described how the occurrence of double-booking of the network digital video cassette recorder is inhibited.

Further, WO 98/59498 A1 describes a set top box for an IEEE 1394 serial bus network which divides a transport stream into several partial transport streams which are respectively distributed to different devices via a respective isochronous channel. Generally, audio/video streams are transmitted and stored within an IEEE 1394 network in an MPEG compressed format in order to reduce the amount of bandwidth and storage space required for a stream of data.

The distribution of MPEG-2 transport streams on the IEEE 1394 based home network as partial transport streams is described in EP 0 917 355 A1. This document describes all components necessary to generate correct partial MPEG-2 transport streams and how the program association table (PAT), the program map table (PMT) and the selection information table (SIT) have to be created for a valid partial MPEG-2 transport stream.

As described in DE 198 44 635 A1 an easy way to provide a time shifting application is to connect an external hard disk drive to the IEEE 1394 serial bus. A live stream can then be sent to and recorded on the hard disk drive and the recorded stream can be played back simultaneously from the hard disk drive and be decoded and displayed. In order to record the correct stream on the hard disk drive a transport stream de-multiplexer is required within the controlling device, i.e. the TV set, to decode program stream information (PSI) and service information (SI). This information must be used to assemble the correct stream to be recorded. A second de-multiplexer is required within the TV set to decode the program stream information and service information from the retrieved recorded stream to extract the video and/or audio streams which should be supplied to a user.

However, these described solutions for time shift applications inherit the drawback that always a complicated setup is required and the load of video data which is sent via the network is rather high. Further, it is always required that several devices interact with each other and therefore need to be specially adapted to enable a time shift application.

Therefore, it is the object underlying the present invention to provide a new solution for enabling time shift applications in an easy and uncomplicated way.

This object is solved with a tuning device according to the present invention which comprises a tuner unit generating a transport stream from a received service, which is characterized by a storage unit for storing at least a partial transport stream generated from said transport stream and outputting said partial transport stream upon request.

Therefore, according to the present invention, tuning and time shift application is supported cost-optimized, since the storage unit which might be a hard disk drive is implemented directly within the tuning device. Further, since a tuner itself is a rather inexpensive device, the possibility for time shift applications is provided by just replacing an existing tuning device with the tuning device according to the present invention. Since the storage and retrieving of a full or partial transport stream is basically performed similar to the tuning to and direct retrieving with a tuning device according to the prior art which only comprises a tuner unit to generate a transport stream from a received service, no or only very small adaptations have to be performed to existing control and output devices. Further, this solution according to the present invention decreases the load of an audio, video, audio/video and/or data channel which has to be set up between the tuning device and a respective output device, since only audio/video data or other data signals have to be transmitted which ought to be output or used in another application such as video editing, recording onto a magnetic tape or the like.

Preferably, the tuning device according to the present invention additionally comprises a service information control unit to derive service information from said transport stream and to distribute said service information to output devices connected to said tuning device. Further preferably, said service information control unit comprises a command generation control means generating asynchronous commands to distribute said service information to output devices connected to said tuning device.

These features enable to provide the output devices connected to said tuning device with the life service information, i. e. with the service information of the currently received service which gets converted into a transport stream. Therefore, the output devices get supplied with the same information as with currently available tuning devices. In case the life service information is sent via asynchronous commands to a respective output device, i. e. data receiving device, the connection between the tuning device according to the present invention and the output device needs to carry only a very small amount of data.

Further preferably, the tuning device according to the present invention comprises a partial transport stream generation unit to generate said partial transport stream to be stored on said storage unit. Still further preferably, the tuning device according to the present invention comprises a controller receiving information about a content of said partial transport stream to be generated preferably via at least one asynchronous command and supplying said information to said partial transport stream generation unit.

Therefore, according to the present invention a service which should be subjected to the time shift application according to the present invention can be selected by a user similar to the conventional selection of a service to be outputted. Similar to existing combinations of tuning devices and output devices the content of the partial transport stream to be generated is determined either via the output device which also outputs the life service information based on which a user can chose the content of the partial transport stream to be generated, or said necessary content information is supplied directly to the tuning device, e. g. with help of a remote control.

The tuning device according to the present invention is further preferably characterized in that said data storage unit is able to simultaneously record said partial transport stream and to reproduce said partial transport stream at the same time or time shifted and/or at least one other recorded partial transport stream. Therewith, the whole functionality for a time shift application is given as it is e. g. also described in the above-mentioned DE 198 44 635 A1.

The tuning device according to the present invention is preferably a stand-alone network device and said storage unit outputs said partial transport stream to a network. Further preferably, said network is an IEEE1394 network.

As mentioned above, said data storage unit is preferably realized as a hard disk drive. Alternatively, other storage means which allow a fast enough access for writing and reading might also be used.

Furthermore, as also stated above, the present invention is not limited to supply the eventually time shifted full or partial transport stream to an output device, but also other connected devices might request and/or receive the audio/video or other data supplied by the tuning device according to the present invention, e. g. for purposes of data processing, storing or forwarding the received and eventually time shifted data.

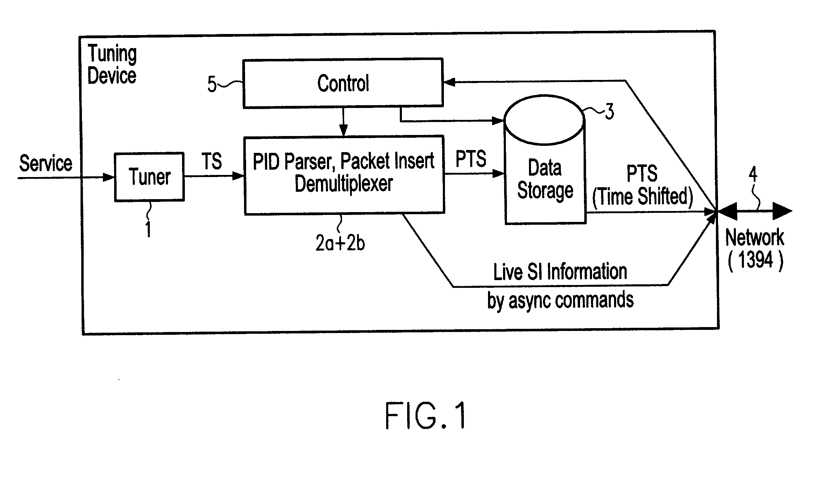

Further features and advantages of the tuning device according to the present invention are elucidated by the following description of an exemplary embodiment thereof taken in conjunction with the accompanying drawing, wherein
- **Fig. 1**: shows a preferred embodiment of a tuning device according to the present invention connected to an IEEE1394 network.

The tuning device according to the present invention receives an incoming service with a tuner unit 1 in the same way as a conventional tuning device or set top box. The tuner unit 1 generates a transport stream TS from the incoming service and supplies it to an IEEE1394 network 4 in a similar manner as the tuning devices according to the prior art. However, this functionality is not shown in Fig. 1. Fig. 1 only shows the additional functionality according to the present invention. Also, additional parts or units necessary for the general functionality, but not adapted to the invention and well known to those skilled in the art are not shown, like e.g. an IEEE 1394 interface. Further, parts or units shown and described in the following in respect to the functionality provided by the tuning device according to the present invention which are already available in a common tuning device need not to be additionally provided, but might be shared or only slightly adapted to include the new functionality described in the following.

According to the present invention the transport stream TS generated by the tuner unit 1 is supplied to a service information control unit 2a and a partial transport stream generation unit 2b. In the preferred embodiment shown in Fig. 1 these both units are realized by a PID parser, packet insert and demultiplexing block. This block 2a+2b generates asynchronous commands to communicate the life service information via an IEEE1394 network 4 to output devices or other devices which enable a selection of the wanted content to be distributed through the IEEE1394 network 4 either directly or time shifted. Further, the PID parser, packet insert, demultiplexer block 2a+2b generates the full or partial transport stream PTS to the outputted directly or time shifted from the incoming transport stream TS based on a content information supplied by a control unit 5.

The control unit 5 receives said content information either directly, e.g via a not shown remote conrol, or via the IEEE1394 network 4 from a user or an application and forwards it in an appropriate formate to the PID parser, packet insert and demultiplexer block 2a+2b.

The generated partial transport stream is supplied to a data storage unit 3 which supplies the recorded full or partial transport stream PTS, e. g. time shifted, to the IEEE1394 network 4 according to commands supplied by the control unit 5.

The PID parsing, packet insert and demultiplexing functions are basically performed like in the European Patent Applications EP 0 917 355 A1 and the European Patent Application "Network Storage Device" with Application No. EP-A-00115765.0 which are both submitted by the Applicant and which contents are herewith included by reference into this application.

## Claims

1. Tuning device comprising a tuner unit (1) generating a transport stream (TS) from a received service, **characterized by** a storage unit (3) for storing at least a partial transport stream (PTS) generated from said transport stream (TS) and outputting said partial transport stream (PTS) upon request.

2. Tuning device according to claim 1, **characterized by** a service information control unit (2a) to derive service information from said transport stream (TS) and to distribute said service information to output devices connected to said tuning device.

3. Tuning device according to claim 2, **characterized in that** said service information control unit (2a) comprises a command generation control means generating asynchronous commands to distribute said service information to output devices connected to said tuning device.

4. Tuning device according to anyone of the preceding claims, **characterized by** a partial transport stream generation unit (2b) to generate said partial transport stream (PTS) to be stored on said storage unit (3).

5. Tuning device according to claim 4, **characterized by** a controller (5) receiving infomation about the content of said partial transport stream (PTS) to be generated preferrably via at least one asynchronous command and supplying said information to said partial transport stream generation unit (2b).

6. Tuning device according to anyone of claims 1 to 5, **characterized in that** said data storage unit (3) is able to simultaneously record said partial transport stream (PTS) and reproduce said partial transport stream (PTS) at the same time or time shifted and/or at least one other recorded partial transport stream.

7. Tuning device according to anyone of claims 1 to 6, **characterized in that** it is a stand-alone network device and said storage unit (3) outputs said partial transport stream (PTS) to a network.

8. Tuning device according to claim 7, **characterized in that** said network is an IEEE 1394 network.
